Europäisches Patentamt

European Patent Office

Office européen des brevets

(19)

(11) Veröffentlichungsnummer: **0 329 661 B1**

(12) **EUROPÄISCHE PATENTSCHRIFT**

(45) Veröffentlichungstag der Patentschrift: 06.02.91

(21) Anmeldenummer: 87906421.0

(22) Anmeldetag: 02.10.87

(86) Internationale Anmeldenummer:
PCT/EP87/00568

(87) Internationale Veröffentlichungsnummer:
WO 88/02285 07.04.88 Gazette 88/08

(51) Int. Cl.⁵: **B 09 B 5/00**, B 01 D 11/02

(54) **VERFAHREN ZUR AUFARBEITUNG VON KONTAMINIERTER ERDE.**

(30) Priorität: 03.10.86 DE 3633699

(43) Veröffentlichungstag der Anmeldung:
30.08.89 Patentblatt 89/35

(45) Bekanntmachung des Hinweises auf die
Patenterteilung:
06.02.91 Patentblatt 91/06

(84) Benannte Vertragsstaaten:
AT BE FR GB IT LU NL SE

(56) Entgegenhaltungen:
EP-A-0 095 144   US-A-2 665 238
EP-A-0 185 831   US-A-4 132 010
EP-A-0 192 285   US-A-4 336 136
DE-A-2 531 732

Chemical Abstracts, Band 91, Nr. 26, 24.
Dezember 1979, (Columbus, Ohio, US); J.M.L.
Penninger: "Extraction of oily matter from spent
bleaching earth with water at elevated
temperature and pressure", siehe Seite 302,
Zusammenfassung 216212x, & J. Chem.
Technol. Biotechnol. 1979, 29(3), 154-7

(73) Patentinhaber: Still Otto GmbH
Christstrasse 9 Postfach 10 18 50
D-4630 Bochum 1 (DE)

(72) Erfinder: TIPPMER, Kurt
Bromberger Strasse 34
D-4350 Recklinghausen (DE)

(74) Vertreter: Dahlkamp, Heinrich-Leo, Dipl.-Ing.
c/o Still Otto GmbH Patentabteilung
Christstrasse 9 Postfach 10 18 50
D-4630 Bochum 1 (DE)

## Beschreibung

Die Erfindung bezieht sich auf ein Verfahren zur Aufbereitung von kontaminierter Erde gemäß Oberbegriff des Hauptanspruches.

Zweck des erfindungsgemäßen Verfahrens ist es, kontaminierte Erde, speziell von Kokereien oder Anlagen mit ähnlichen Produkten, aufzuarbeiten. Diese Erde ist in der Regel mit verschiedenen anorganischen und organischen Stoffen wie Benzol, Toluol, Naphthalin, Phenolen und mono- und polycyclischen oder aliphatischen sauerstoff-, stickstoff- und schwefelhaltigen Kohlenwasserstoffverbindungen sowie einfachen und komplexen anorganischen oder organischen Salzen verunreinigt.

Aus der DE—A—32 16 771 ist ein Verfahren zur Reinigung eines mit Giftstoffen beladenen Bodens bekannt, wobei der Boden z.B. in einer Drehtrommel erhitzt wird und die anfallenden gasförmigen Produkte verbrannt werden.

Die DE—A—34 47 079 bezieht sich ebenfalls auf ein Verfahren zur thermischen Behandlung verunreinigter Erde, wobei die Erde bei Temperaturen von mindestens 600°C behandelt wird und das anfallende Gas ebenfalls verbrannt wird.

Bei diesen beiden genannten Verfahren sollen die gasförmigen Schadstoffe jeweils durch eine thermische Behandlung bei relativ hohen Temperaturen aus dem Boden entfernt werden. Dazu bedarf es verhältnismäßig großer Energiemengen.

Die DE—A—25 31 732, die den Ausgangsprodukt für den Oberbegriff des Anspruches 1 darstellt, beschreibt ein Verfahren zur Beseitigung, Behandlung bzw. Regenerierung von ölverseuchtem Erdreich, wobei das Öl bzw. die wasserlöslichen Schadstoffanteile mit entspanntem Heißwasser vorzugsweise bei Temperaturen zwischen 60 und 90°C ausgewaschen wird. Das zerkleinerte Reinigungsgut wird dabei in einer Schneckentrommel mit dem Reiniggungsmedium intensiv durchmischt und anschließend durch Absetzen in einem Klärbecken vom schadstoffbindenden Reinigungsmedium getrennt.

Ein ähnliches Verfahren zum Regenerieren von insbesondere durch Öl verseuchte Erde ist aus der DE—A—27 24 271 bekannt. Dort wird die verseuchte Erde nach eventueller Zerkleinerung mit einer Flüssigkeit, z.B. Wasser, aufgeschlämmt und in einer Durchlaufkammer auf Verdampfungstemperatur erhitzt. Die oberste Schicht der Aufschlämmung soll in der Durchlaufkammer abgestreift bzw. abgetrennt werden. Es hat sich gezeigt, daß die eingangs beschriebenen Stoffe bei einer derartigen Behandlung mit einer Temperatur bis zur Verdampfungstemperatur des Wassers nur in geringem Maße oder teilweise überhaupt nicht aus der kontaminierten Erde ausgewaschen werden können.

Aufgabe der Erfindung ist es nun, ein Verfahren zur Aufbereitung von kontaminierter Erde vorzuschlagen, bei dem einerseits auf die aufwendige thermische Behandlung bei Temperaturen von mindestens 600°C verzichtet werden kann und andererseits auch Stoffe gelöst werden können, die bei dem vorgenannten Aufschlämmen bis auf Verdampfungstemperatur des Wassers noch nicht gelöst werden. Die erfindungsgemäß Lösung des Verfahrens ist im Kennzeichen des ersten Anspruches wiedergegeben. Die Unteransprüche geben sinnvolle Verfahrensvarianten wieder.

Mit dem erfindungsgemäßen Verfahren ergeben sich folgende Vorteile gegenüber den vorher beschriebenen bekannten Verfahren:

1. Im Vergleich zu den thermischen Verfahren (Verbrennung oder Pyrolyse) bei Temperaturen von mehr als 600°C wird weniger Fremdenergie benötigt.

2. Bei der Entsorgung der flüssigen und gasförmigen Kontaminanten bei der partiellen Oxidation (POX) oberhalb von 1.200°C entstehen weniger Schadstoffe, während bei der Pyrolyse und Verbrennung sich vor allem Schadstoffe wie Dioxine und Furane bilden können.

3. Die Wiederbelebung der behandelten Erde ist gegenüber der gesinterten oder verklinkerten Erde aus den thermischen Verfahren einfacher möglich.

4. Der Rest-C-Gehalt der in den Extraktionsstufen behandelten Erde ist deutlich geringer als im Falle der Pyrolyse der Erde bei Temperaturen von mehr als 600°C.

5. Es kann ein einfaches Lösungsmittel, wie z.B. Wasser, verwendet werden.

6. Es besteht die Möglichkeit der Anwendung von Membranverfahren bei der Aufbereitung dieser Wässer und der Herstellung von Reinwasser für die Endbehandlung der kontaminierten Erde. Ein wesentlicher Vortiel ist hierbei, daß das Lösungsmittel Wasser im Kreislauf verbleiben und ein eventueller Überschuß als Reinwasser der Umkehrosmose ausgeschleust werden kann.

7. Das Verfahren entfernt fast alle löslichen Stoffe aus der kontaminierten Erde, so daß in der biologischen Endbehandlung die Mikroorganismen nur wenig organische Substanzen abzubauen haben. Hierin liegt ein Vorteil gegenüber den anderen rein biologischen Verfahren.

8. Durch die hohe Extraktionsisotherme im Bereich 120 bis 180°C kann das Lösungsvermögen der Kontaminanten erhöht werden.

9. Durch den reversiblen Effekt bei der Kühlung der beladenen Lösung können Lösungsmittel und Kontaminanten durch einfache Dekantation getrennt werden, d.h. es sind, wie bei anderen Verfahren, keine weiteren Extraktionsschritte notwendig.

10. Durch die Anwendung von Wasser bei hohen Temperaturen und Drücken oberhalb des Wasserverdampfungspunktes werden auch die anorganischen Schadstoffe als Elektrolyte gelöst, die durch die Einschaltung der Karbonisierung, Strippung und Umkehrosmose ebenfalls aus dem Umlauf entfernt werden können.

11. Die bei der partiellen Oxidation frei werdenden Halogene aus den entsprechenden organischen und anorganischen Schadstoffen können mit bekannten Verfahren aus dem Spaltgas entfernt werden.

12. Die Verwendung des schadstofffreien Restgases der POX dient neben der POX-Abhitze zur weiteren Energierückgewinnung und das sich bildenden $CO_2$ kann in der Karbonisierungsstufe verwendet werden.

Beschreibung

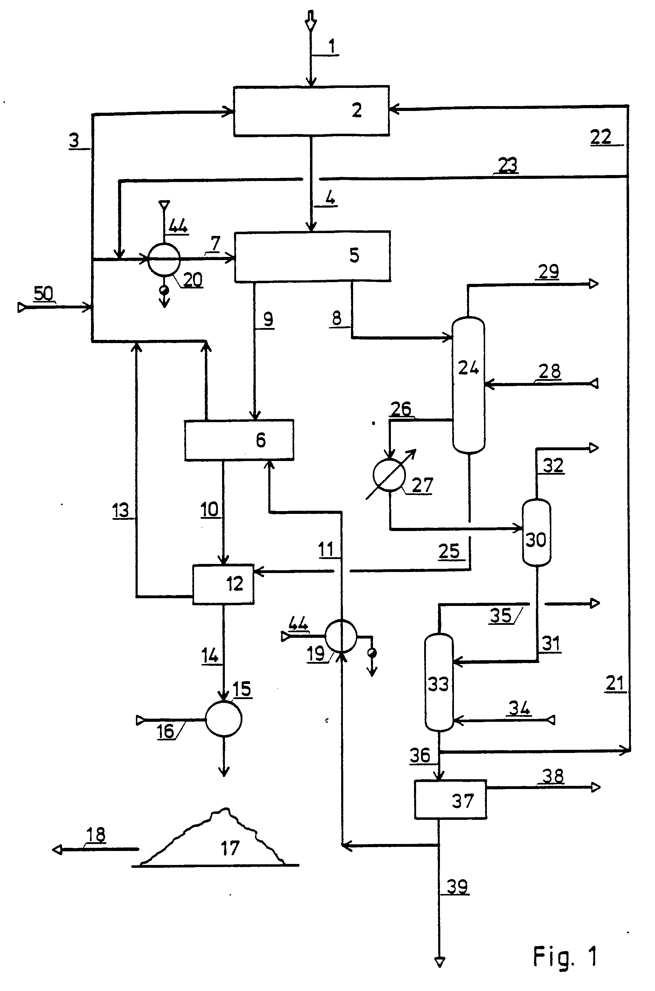

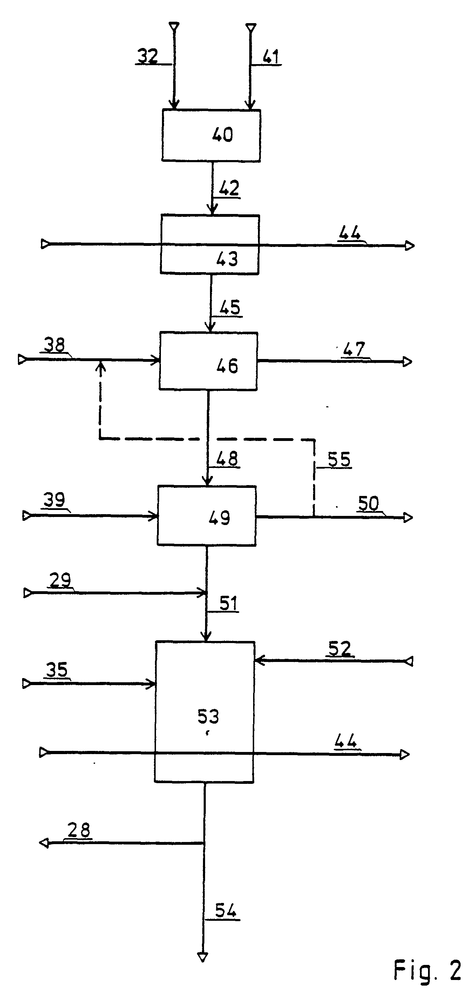

Die Erfindung wird beispielsweise anhand der beigefügten Blockschaltbilder der Figuren 1 und 2 näher erläutert.

Die kontaminierte Erde (1) wird in einem Homogenisierer (2) zerkleinert und unter Zugabe von Umlaufwasser (3)/(22) zu einer Suspension (4) (bis 300 g/l) aufbereitet.

In einem Extraktionssystem (5)/(6) (mehrstufig) wird die Erde (4)/(9) im Gegenstrom mit Umlaufwasser (7)/(11) behandelt. Die Betriebsparameter sind insbesondere:

t = 140 bis 180°C
p = 8 bis 12 bar
pH = 8 bis 9.

In den Extrakteuren (5)/(6) wird sich eine Flüssig- (8) und eine Feststoffphase (9)/(10) bilden, so daß es zu sogenannten Trenneffekten kommt. Durch die Einschaltung von mechanischen Elementen (Rührern) oder geeigneten Gegenstromkaskaden wird dafür gesorgt, daß die Feststoffphase als fließfähige Suspension erhalten bleibt.

In der Nachextraktion (6) wird die Suspension (9) nochmals mit sogenanntem Reinwasser (11) nachbehandelt.

In einem Trocknungssystem (12) (Trommel- oder Bandtrockner) wird die Erde bis auf eine Restfeuchte von ca. <30 Gew.% vom Restwasser (13) getrennt.

In einem weiteren Homogenisierer und Mischer (15) wird der Erde (14) *Biomasse* (16) beigemischt (Humus o.ä.) und das Gemisch anschließend in einer sogenannten Reife- oder Belebungsdeponie (17) gelagert und steht nach einiger Zeit als aufgearbeitete Erde (18) wieder zur Verfügung.

Mit dem physikalischen Weg der *Heißwasser-Extraktion* wird eine Entfernung der Schadstoffe von >95% erwartet. Den Rest (in der Hauptsache Kohlenwasserstoffe ohne Einbindung von S-, O- und N-Atomen) von <5% müßten dann die *Mikroorganismen* der Reifedeponie bewerkstelligen. Anorganische Elektrolyte, die sich ggf. bei der Hydrolyse aus den entsprechenden Kohlenwasserstoffverbindungen bilden, können ebenfalls unter Anwendung der Umkehrosmose aus dem Kreislauf entfernt werden.

Da die Restbelastung der Erde in der Hauptsache aus Kohlenwasserstoff besteht, kann der Restabbau durch bereits bekannte, selektiv arbeitende Spezies erfolgen.

Das belastete Heißwasser (8)/(26) der Extraktionsstufe (5) wird anschließend gekühlt und somit das Lösungsvermögen reduziert. Die Kühlung (27) kann ein- oder mehrstufig erfolgen, so daß gegebenenfalls verschiedene Ölfraktionen (32) aus den nachfolgenden Separatoren (30) abgezogen werden können.

Zur Einstellung des Alkali-Aluminat-Silikat-Gehaltes des Heißwassers (8) kann zusätzlich eine Karbonisierungsstufe (24) eingebaut werden, wo mit z.B. $CO_2$-haltigem Rauchgas (28) ein Teil dieser Stoffe (25), z.B. $Al_2O_3$, $SiO_2$, ausgefällt wird, die in der Regel als kolloidale Lösungen vorliegen. Diese Stoffe werden z.B. im Trockner (12) der Erde beigemischt.

Die ölige Phase mit ihren schwefel-, sauerstoff-, stickstoff- und halogenhaltigen Schadstoffen (32) wird anschließend mit dem Verfahren der partiellen Oxidation (POX) (40) mittels $O_2$, Heißluft (41) oder einem Gemisch aus $O_2$ und Luft bei Temperaturen von 1.200 bis 1.400°C in die Restgase (42), (45), (48), (51) CO und $H_2$ sowie $H_2S$, HCl, HF usw. umgewandelt. Entstandene Nebenprodukte wie HCL, $H_2S$, COS sowie Spuren von $NH_3$ und HCN können mit bekannten Verfahren aus dem Spaltgas entfernt werden.

Das Gas wird anschließend verbrannt. Die im Kühler (43) aus der Abhitze der Restgase (42) der POX (40) und die bei der Nachverbrennung (53) gewonnene Energie (44) dient zur zusätzlichen Aufwärmung (19)/(20) der Wasserströme (11)/(7) der Extraktion (5)/(6) und/oder direkt als Antrieb von mechanischen Einrichtungen.

Aus der wäßrigen Phase (31) werden gegebenenfalls in einem Stripper (33) unter Zugabe von Direktdampf (34) Dämpfe mit $H_2S$, $NH_3$ und HCN (35) abgetrennt. Ein Teil des Umlaufwassers aus dem Stripper (33) wird als Umlaufwasser über die Leitungen (21)/(22) der Homogenisierung (2) oder über die Leitung (23) der Extraktionsstufe (5) zugeführt. Der andere Teil des Umlaufwassers (36) wird zu sogennantem Reinwasser aufbereitet und zwar mittels der Membrantrennverfahren Cross-Flow-Filtration und/oder Umkehrosmose (37). Das Konzentrat (38) wird nach Abtrennung der Salzlösung (47) in einem Halogenabsorber (46) dem Umlaufwasserstrom (3) beigemischt. Andernfalls kann das Konzentrat (38) auch als Moderator der öligen Phase der POX (40) beigemischt werden. Das nach der Umkehrosmose (37) anfallende Reinwasser wird vorzugsweise über die Leitung (11) zur Extraktionsendstufe (6) geführt, wobei Überschußwasser (39) aus dem System ausgeschleust wird oder in einem Direktkühler (49) mit dem Abgas (48) aus dem Halogenabsorber (46) aufgeheizt und als erhitztes Wasser (50) für die Extraktionsstufen (5)/(6) benutzt und dem unbehandelten Umlaufwasser (3) beigemischt oder dem Konzentrat (38) vor dem Halogenabsorber (46) zugeführt wird.

In der Nachverbrennung (53) werden die Restgase (51) unter Zugabe von Luft (52) sowie Dämpfen (35) aus dem Stripper (33) nachverbrannt. Den Rauchgasen (54) wird vor dem Einleiten in die Atmosphäre Überschußwärme (44) entzogen, die wiederum zur Wassererwärmung (19)/(20) dient.

Bezugszeichenliste

(1)   kontaminierte Erde (feucht)
(2)   Vorbereitung (Homogenisierung)
(3)   belastetes Umlaufwasser
(4)   Suspension (Schlamm)
(5)   Hauptextraktion (140 bis 180°C)
(6)   Nachextraktion (120 bis 180°C)
(7)   belastetes Umlaufwasser von (6) (>200°C)
(8)     belastetes Wasser und Kolloide
        als Alkali etc.
(9), (10) Feststoffphase
(11)    salzarmes Wasser (>200°C)
(12)    Trockner
(13)    Restwasser
(14)    getrocknete Erde
(15)    Mischer
(16)    Biomasse und Mikroorganismen
(17)    Reifungsdeponie
(18)    aufgearbeitete Erde
(19), (20) Erhitzer
(21), (22)
(23)    belastetes Umlaufwasser (ca. 30°C)
(24)    Karbonisierung
(25)    $Al_2O_3$, $SiO_2$
(26)    Alkali, Karbonate und gelöste
        organische Stoffe
(27)    Kühler
(28)    $CO_2$-haltiges Rauchgas von (53)
(29)    Rauchgas zur Nachverbrennung (53)
(30)    Separationsstufe (Dekanter)
(31)    wäßrige Phase
(32)    ölige Phase mit organischen
        Produkten
(33)    Stripper (>100°C)
(34)    Direktdampf
(35)    Dämpfe mit eventuell $NH_3$, $H_2S$,
        HCN zur Nachverbrennung (53)
(36)    wäßrige Phase
(37)    Cross-Flow-Filtration (CFF)
        und/oder Umkehrosmose (RO)
(38)    Konzentrat
(39)    Überschußwasser
(40)    partielle Oxidation (POX bei ca.
        1.200 bis 1.400°C)
(41), (42) Luft bzw. Sauerstoff
(42), (45),
(48), (51) Restgase
(43)    Kühler
(44)    Überschußwärme evtl. für Erhitzer
        (19), (20)
(46)    Halogen-Absorber (ca. 250°C)
(47)    Salzlösung zur eventuellen
        Entsorgung
(49)    Direktkühler
(50)    erhitztes Wasser
(53)    Nachverbrennung
(54)    Rauchgas zur Atmosphäre
(55)    Heißwasser.

**Patentansprüche**

1. Verfahren zur Aufbereitung von kontaminierter Erde, bestehend aus folgenden Verfahrensstufen:
a) Homogenisierung und Zerkleinerung der kontaminierten Erde
b) Zugabe von aufbereitetem Umlaufwasser
c) Behandlung der Suspension in einem Extraktionssystem mit warmem oder heißem Wasser
d) Trocknung der aus den Extraktionssystemen abgezogenen Suspension
e) Trennung der gelösten Stoffe aus dem Umlaufwasser
dadurch gekennzeichnet, daß die Suspension (4) der mit anorganischen und organischen Stoffen verunreinigten Erde in einem ein- oder mehrstufigen Extraktionssystem (5)/(6) bei einer Temperatur von 120 bis 180°C und einem Druck von 8 bis 12 bar im Gegenstrom mit Umlaufwasser (3)/(22) behandelt und die aus dem Extraktionssystem abgezogene Suspension bis auf eine Restfeuchte von <30 Gew.% getrocknet wird und die gelösten Stoffe (26) aus dem Umlaufwasser durch Abkühlung (27) abgetrennt werden.

2. Verfahren zur Aufarbeitung von kontaminierter Erde nach Anspruch 1, dadurch gekennzeichnet, daß die Extraktion (5) bei einer Temperatur von 140 bis 180°C durchgeführt wird.

3. Verfahren zur Aufarbeitung von kontaminierter Erde nach Anspruch 1 oder 2, dadurch gekennzeichnet, daß in den Extraktionssystemen (5)/(6) unter Einschaltung von mechanischen Elementen (Rührern) eine fließfähige Suspension (9)/(10) aufrechterhalten wird.

4. Verfahren nach Anspruch 1, 2 oder 3, dadurch gekennzeichnet, daß in der letzten Extraktionsstufe (6) die Suspension (9) mit in einer Umkehrosmose (37) erzeugtem Reinwasser (11) nachbehandelt wird.

5. Verfahren nach mindestens einem der Ansprüche 1 bis 4, dadurch gekennzeichnet, daß die getrocknete Erde homogenisiert und ihre eine Biomasse (16), vorzugsweise Humuserde, beigemischt wird und das anfallende Gemisch anschließend auf einer Reife- oder Belebungsdeponie (17) gelagert wird.

6. Verfahren nach mindestens einem der Ansprüche 1 bis 5, dadurch gekennzeichnet, daß der in der Erde (14) verbleibende Rest der Schadstoffe durch Mikroorganismen (16) beseitigt wird.

7. Verfahren nach mindestens einem der Ansprüche 1 bis 6, dadurch gekennzeichnet, daß das nach der Extraktionsstufe (5) anfallende Heißwasser (8) zur Abtrennung verschiedener Ölfraktionen (32) ein- oder mehrstufig gekühlt wird.

8. Verfahren nach mindestens einem der Ansprüche 1 bis 7, dadurch gekennzeichnet, daß zur Einstellung des Alkali-Aluminat-Silikat-Gehaltes des aus den Extraktionstufen abgezogenen Heißwassers (8) in einer zusätzlichen Stufe (24) mit z.B. $CO_2$-haltigem Rauchgas (28) ein Teil dieser Stoffe ausgefällt wird, die in der Regel als kolloidale Lösungen (25) vorliegen.

9. Verfahren nach mindestens einem der Ansprüche 1 bis 8, dadurch gekennzeichnet, daß die aus dem Heißwasser abgeschiedene ölige Phase (32) mit ihren schwefel-, sauerstoff-, stickstoff- und halogenhaltigen Schadstoffen nach dem Verfahren der partiellen Oxidation (40) mittels $O_2$, Heißluft oder einem Gemisch aus $O_2$ und Luft bei Temperaturen von 1.200 bis 1.400°C in CO und $H_2$ sowie $H_2S$, HCl, HF usw. umgewandelt werden.

10. Verfahren nach Anspruch 9, dadurch gekennzeichnet, daß das anfallende Gas nach einer H₂S- und Halogenwäsche (46) verbrannt (53) wird.

11. Verfahren nach den Ansprüchen 9 und 10, dadurch gekennzeichnet, daß die Energie der Abhitze (44) zur Aufwärmung der Extraktionsstufen verwendet wird.

12. Verfahren nach den Ansprüchen 1 bis 10, dadurch gekennzeichnet, daß das Umlaufwasser mittels Cross-Flow-Filtration und/oder Umkehrosmose (37) zu Reinwasser aufbereitet wird, das vorzugsweise (11) für die Extraktionsstufe (6) benutzt und dessen Überschuß (39) aus dem System ausgeschleust wird.

13. Verfahren nach Anspruch 9 und 12, dadurch gekennzeichnet, daß das Konzentrat (38) der Umkehrosmose (37) der aus dem Heißwasser abgeschiedenen öligen Phase (32) zur gemeinsamen Umwandlung beigemischt wird.

## Revendications

1. Procédé pour traiter la terre contaminée se composant des phases de procédé suivantes:
   a) homogénéisation et broyage de la terre contaminée
   b) addition d'eau de circulation préparée
   c) traitement de la suspension dans un système d'extraction avec de l'eau chaude ou bouillante
   d) séchage de la suspension retirée des systèmes d'expansion
   e) séparation des substances dissolues de l'eau en circulation
   caractérisé par le fait que la suspension (4) de la terre contaminée avec des substances inorganiques et organiques est traitée dans un système d'extraction (5)/(6) à une ou plusieurs cellules à une température de 120 à 180°C et une pression de 8 à 12 bar dans le contre-courant avec de l'eau en circulation (3)/(22) et que la suspension retirée du système d'extraction, à l'exception d'une humidité résiduelle de <30% en poids, est séchée et que les substances dissolues (26) sont séparées de l'eau en circulation par refroidissement (27).

2. Procédé pour traiter la terre contaminée selon la revendication 1, caractérisé par le fait que l'extraction (5) est effectuée à une température située entre 140 et 180°C.

3. Procédé pour traiter la terre contaminée selon la revendication 1 ou 2 caractérisé par le fait qu'une suspension fluide (9)/(10) est maintenue dans les systèmes d'extraction (5)/(6) en insérant des éléments mécaniques (agitateurs).

4. Procédé selon revendication 1, 2 ou 3 caractérisé par le fait que la suspension (9) est retraitée dans la dernière cellule d'extraction (6) avec de l'eau pure (11) produite dans une osmose inverse (37).

5. Procédé selon au moins l'une des revendications 1 à 4 caractérisé par le fait que la terre séchée est homogénéisée et qu'une biomasse, de préférence de la terre humique, lui est mélangée et que le mélange en résultant est stocké ensuite sur un dépôt de maturation ou de régénération (17).

6. Procédé selon au moins l'une des revendications 1 à 5 caractérisé par le fait que les substances nocives restant dans la terre (14) sont éliminées par des microorganismes (16).

7. Procédé selon au moins l'une des revendications 1 à 6 caractérisé par le fait que l'eau chaude (8) résultant de la cellule d'extraction (5) est refroidie à un ou plusieurs niveaux pour la séparation de diverses fractions huilières (32).

8. Procédé selon au moins l'une des revendications 1 à 7 caractérisé par le fait que pour ajuster la teneur en alcali, aluminate et silicate de l'eau chaude (8) extraite des cellules d'extraction, une partie de ces substances, qui se présentent en général sous forme de solutions colloïdales (25), sont précipitées dans une cellule supplémentaire (24) avec du gaz de fumée (28) contenant, p.e., du CO₂.

9. Procédé selon au moins l'une des revendications 1 à 8 caractérisé par le fait que la phase huileuse (32) extraite de l'eau chaude est transformée avec ses substances nocives sulfureuses, oxygénifères, azotées et halogénées en CO et H₂ ainsi qu'en H₂S, HCl, HF etc., ce selon le procédé de l'oxydation partielle (40) à l'aide d'O₂, d'air chaud ou d'un mélange de O₂ et d'air à des températures de 1.200 à 1.400°C.

10. Procédé selon la revendication 9 caractérisé par le fait que que le gaz résultant d'un lavage H₂S et halogène (46) est brûlé (53).

11. Procédé selon les revendications 9 et 10 caractérisé par le fait que l'énergie de la chaleur perdue (44) est utilisée pour l'échauffement des cellules d'extraction.

12. Procédé selon les revendications 1 à 10 caractérisé par le fait que l'eau en circulation est traitée à l'aide de la cross-flow-filtration et/ou de l'osmose inverse (37) et transformée en eau pure qui est utilisée de préférence (11) pour la cellule d'extraction (6) ou dont l'excédant (39) est éclusé du système.

13. Procédé selon les revendications 9 et 12 caractérisé par le fait que la substance concentrée (38) de l'osmose inverse (37) est mélangée à la phase huileuse (32) extraite de l'eau chaude en vue d'une transformation commune.

## Claims

1. Process for the treatment of contaminated earth consisting of the following process stages:
   a) homogenization and comminution of the contaminated earth;
   b) addition of treated circulation water;
   c) treatment of the suspension in an extraction system using warm or hot water;
   d) drying of the suspension withdrawn from the extraction systems;
   e) separation of the dissolved substances from the circulated water;
   characterized in that the suspension (4) of the earth contaminated by inorganic and organic substances is treated in a single or multiple stage extraction system (5)/(6) at a temperature of 120 to 180°C and a pressure of 8 to 12 bar by means of countercurrently applied circulated water (3)/(22) and the suspension withdrawn from the extraction system is dried down to a residual moisture of less than 30% by weight and the dissolved substances (26) are separated from the circulated water by means of cooling (27).

2. Process for the treatment of contaminated earth according to Claim 1 characterized in that the extraction (5) is carried out at a temperature of 140 to 180°C.

3. Process for the treatment of contaminated earth according to Claims 1 or 2 characterized in that a flowable suspension (9)/(10) is maintained in the extraction systems (5)/(6) making use of mechanical elements (agitators).

4. Process according to Claims 1, 2 or 3 characterized in that the suspension (9) is given a subsequent treatment in the last extraction stage (6) by means of clean water (11) produced by a reverse osmosis system (37).

5. Process according to at least one of the Claims 1 to 4 characterized in that the dried earth is homogenized and mixed with a biomass (16), preferably humus soil, and the arising mixture is subsequently stored on a maturing or activation dump (17).

6. Process according to at least one of the Claims 1 to 5 characterized in that the rest of the pollutants left in the earth (14) is eliminated by action of microorganisms (16).

7. Process according to at least one of the Claims 1 to 6 characterized in that the hot water (8) arising after the extraction stage (5) is cooled in single or multiple stages for the purpose of separating various oil fractions (32).

8. Process according to at least one of the Claims 1 to 7 characterized in that to suitably control the alkali-aluminate-silicate content of the hot water (8) withdrawn from the extraction stages part of these substances which as a rule are present in the form of colloidal solutions (25) is caused to precipitate in an additional stage (24) e.g. by $CO_2$ containing waste gas (28).

9. Process according to at least one of the Claims 1 to 8 characterized in that the oleaginous phase (32) separated from the hot water with its sulfur, oxygen, nitrogen and halogen containing pollutants is converted into CO and $H_2$ as well as $H_2S$, HCl, HF etc. by the process of partial oxidation (40) using $O_2$, hot air or a mixture of $O_2$ and air at temperatures of 1200 to 1400°C.

10. Process according to Claim 9 characterized in that the arising gas is incinerated (53) after $H_2S$ and halogen scrubbing (46).

11. Process according to Claims 9 and 10 characterized in that the energy of the waste heat (44) is used for the heating of the extraction stages.

12. Process according to Claims 1 to 10 characterized in that the circulated water is treated by cross-flow filtration and/or reverse osmosis (37) to obtain clean water which, preferably (11), is used for the final extraction stage (6) with any excess (39) being discharged from the system.

13. Process according to Claims 9 and 12 characterized in that the concentrate (38) from reverse osmosis (37) of the oleaginous phase (32) separated from the hot water is admixed for common conversion.

Fig. 1

Fig. 2